# EUROPEAN PATENT APPLICATION

(11) **EP 2 980 730 A1**
(43) Date of publication of application: **03.02.2016**
(21) Application number: 15178005.3
(22) Date of filing: 23.07.2015
(51) Int. Cl.: G06K 9/20, G06K 9/62

(54) **OBJECT RECOGNITION APPARATUS THAT PERFORMS OBJECT RECOGNITION BASED ON INFRARED IMAGE AND VISIBLE IMAGE**

(30) Priority: 30.07.2014 JP 2014155524
(71) Applicant: Toshiba TEC Kabushiki Kaisha, Tokyo 141-0032 (JP)
(72) Inventor: KAKINO, Tomonari, Shinagawa-ku, Tokyo 141-0032 (JP)
(74) Representative: Takeuchi, Maya

(57) **Abstract**

An object recognition apparatus includes an image capturing unit configured to capture a first image based on infrared or near-infrared light and a second image based on visible light, an object being included in the first and second images, respectively, a storage unit storing image data of articles, and a processing unit configured to determine a first portion of the first image in which the object is contained, extract a second portion of the second image corresponding to the first portion, and select one of the articles as a candidate for the object based on the second portion of the second image and the stored image data.

## Description

### FIELD

Embodiments described herein relate generally to an object recognition device configured to recognize an object from a captured image.

### BACKGROUND

Object recognition technology enables an object included in an image captured by a CCD camera or the like to be identified. An object recognition device using such an object recognition technology specifies a region in which the object is contained based on differences (contrast) in brightness, and then, extracts a partial image in the specified region. Next, the object recognition device analyzes the extracted partial image and generates feature values, such as a hue and a pattern. The feature values indicate features of an external appearance of the object. Then, the object recognition device compares the feature values of the object with feature values of various articles registered in advance and calculates similarity of the feature values to the feature values of the object. The object recognition device selects an article having the highest similarity as a candidate for the object.

However, if the object has a dark color (black, dark blue, or the like) of which the reflection rate of visible light is low, such as an eggplant or an avocado, there is little difference in brightness between the object included in the captured image and the background thereof (black). If there is little difference in brightness, the object recognition device cannot correctly extract the region of the object within the captured image. If the region cannot be correctly extracted, the feature values of the object cannot be accurately generated. Therefore, accuracy of the object recognition may deteriorate.

### DESCRIPTION OF THE DRAWINGS

FIG. 1 is an external view of a store checkout system according to a first embodiment.
FIG. 2 is a block diagram of a scanner device in the store checkout system.
FIG. 3 illustrates a data structure of a recognition dictionary file stored in a point-of-sale terminal of the store checkout system.
FIG. 4 is a block diagram of an imaging unit and an image processing unit in the store checkout system.
FIG. 5 schematically illustrates a configuration of an optical filter of the imaging unit.
FIG. 6 is a flow chart illustrating information processing performed by a CPU according to an object recognition program.
FIG. 7A to FIG. 7C illustrate reflection spectrums of light in the visible wavelength range and infrared wavelength range reflected by surfaces of different objects.
FIG. 8 is a block diagram of an imaging unit and an image processing unit according to a second embodiment.
FIG. 9 is a flow chart illustrating information processing performed by a CPU according to the object recognition program according to a third embodiment.

### DETAILED DESCRIPTION

An embodiment provides an object recognition device that may identify an object with a high accuracy regardless of the color of the object.

In general, according to one embodiment, an object recognition apparatus includes an image capturing unit configured to capture a first image based on infrared light and a second image based on visible light, an object being included in the first and second images, respectively, a storage unit storing image data of articles, and a processing unit configured to determine a first portion of the first image in which the object is contained, extract a second portion of the second image corresponding to the first portion, and select one of the articles as a candidate for the object based on the second portion of the second image and the stored image data.

The first portion may be a rectangular region of the first image.

The processing unit may further be configured to determine the second portion of the second image, in which the object is contained, and select one of the articles as a candidate for the object based on the determined second portion of the second image and the stored image data.

When the second portion of the second image is determinable, the one of the articles may be selected as the candidate based on the determined second portion.

When the second portion of the second image is not determinable, the one of the articles may be selected as the candidate based on the extracted second portion.

The image capturing unit may include an image sensor having a plurality of pixels arranged in a matrix form, each pixel including a first filter that selectively transmits the visible light and a second filter that selectively transmits the infrared or near-infrared light.

The image capturing unit may include a first image sensor, a second image sensor, and a light separating unit configured to separate the infrared or near-infrared light from the visible light and disposed such that the infrared or near-infrared light is directed to the first image sensor and the visible light is directed to the second image sensor.

The object recognition apparatus may further comprise: a light radiating unit configured to radiate the infrared or near-infrared light and the visible light towards the object.

The first and second images may be images of same angle and same size.

The articles are fresh foods including vegetables and fruits.

The present invention also relates to a method for determining a candidate for an object. The method comprises: receiving image data of a first image based on infrared or near-infrared light and image data of a second image based on visible light, an object being included in the first and second images, respectively; storing image data of articles; determining a first portion of the first image in which the object is contained; extracting a second portion of the second image corresponding to the first portion; and selecting one of the articles as a candidate for the object based on the second portion of the second image and the stored image data.

The first portion may be a rectangular region of the first image.

The first and second images may be acquired from an image capturing unit.

The image capturing unit may include an image sensor having a plurality of pixels arranged in a matrix form, each pixel including a first filter that selectively transmits the visible light and a second filter that selectively transmits the infrared or near-infrared light.

The image capturing unit may include a first image sensor, a second image sensor, and a light separating unit configured to separate infrared light from visible light and disposed such that the infrared or near-infrared light is directed to the first image sensor and the visible light is directed to the second image sensor.

The method further comprises irradiating the object with the infrared or near-infrared light and the visible light.

The present invention further relates to a method for determining a candidate for an object. The method comprises: receiving image data of a first image based on infrared or near-infrared light and image data of a second image based on visible light, an object being included in the first and second images, respectively; storing image data of articles; determining whether or not a second portion of the second image in which the object is contained, is determinable; when the second portion is determinable, determining the second portion and selecting one of the articles as a candidate for the object based on the determined second portion and the stored image data; and when the second portion is not determinable, determining a first portion of the first image in which the object is contained, extracting a second portion of the second image corresponding to the first portion, and selecting one of the articles as a candidate for the object based on the extracted second portion and the stored image data.

The first and second portions may be a rectangular region of the first and second images, respectively.

The first and second images may be acquired from an image capturing unit.

The image capturing unit may include an image sensor having a plurality of pixels arranged in a matrix form, each pixel including a first filter that selectively transmits the visible light and a second filter that selectively transmits the infrared or near-infrared light.

The image capturing unit may include a first image sensor, a second image sensor, and a light separating unit configured to separate the infrared or near-infrared light from the visible light and disposed such that the infrared or near-infrared light is directed to the first image sensor and the visible light is directed to the second image sensor.

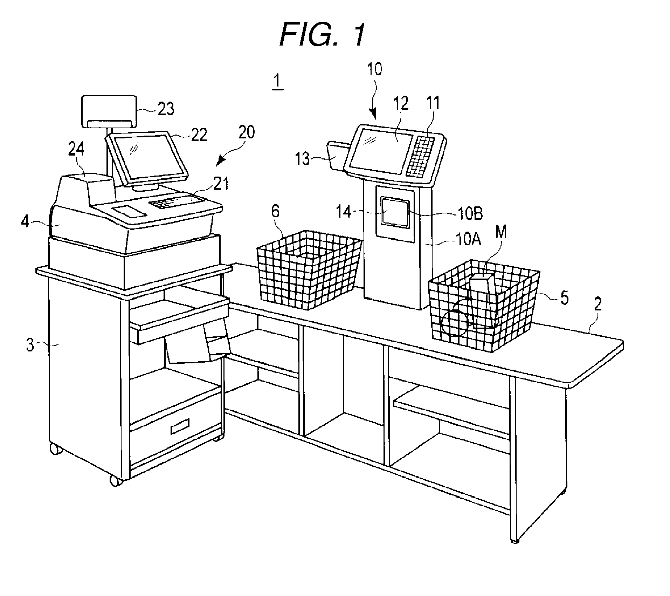

Hereinafter, embodiments of an object recognition device will be described with reference to the drawings. In the embodiments, the object recognition device is applied, as an example, to a vertical scanner device 10 (refer to FIG. 1) which stands at a checkout counter in a supermarket and recognizes merchandise to be purchased by customer.

### (First Embodiment)

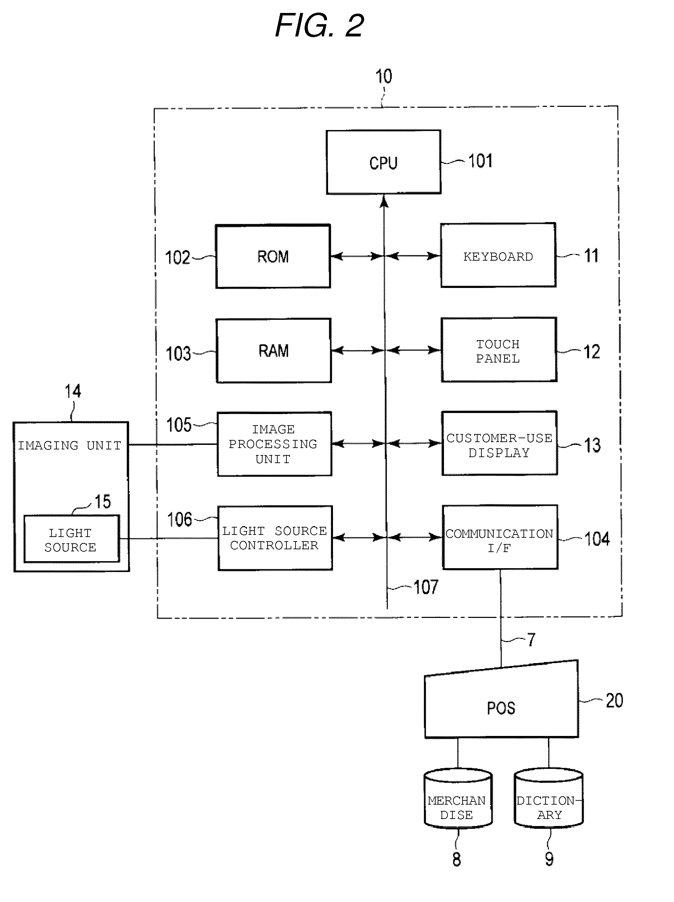

FIG. 1 is an external view of a store checkout system 1 built in the supermarket. The store checkout system 1 includes the scanner device 10 as a registration unit and a point-of-sale (POS) terminal 20 as a payment settlement unit. The scanner device 10 is mounted on a checkout counter 2. The POS terminal 20 is disposed on a drawer 4, which is disposed on a register table 3. The scanner device 10 and the POS terminal 20 are electrically connected to each other by a communication cable 7 (refer to FIG. 2).

The scanner device 10 includes a keyboard 11, a touch panel 12, and a customer-use display 13 as devices used for registering the merchandise. These devices for displaying and operation are mounted on a housing 10A of thin rectangular shape, which configures a main body of the scanner device 10.

An imaging unit 14 is built in the housing 10A. In addition, a rectangular-shaped reading window 10B is formed in the housing 10A on a side of a casher (operator). The imaging unit 14 includes a Charge Coupled Device (CCD) imaging element, which is an area image sensor and a drive circuit, and an imaging lens used for capturing an image in an imaging area by the CCD imaging element. The imaging area is a frame area in which an object is capable of being captured by the CCD imaging element via the reading window 10B and the imaging lens. The imaging unit 14 outputs image data of the image formed on the CCD imaging element via the imaging lens. The imaging unit 14 is not limited to the area image sensor formed of the CCD imaging element. For example, a complementary metal oxide semiconductor (CMOS) image sensor may be used.

The POS terminal 20 includes a keyboard 21, an operator-use display 22, a customer-use display 23, and a receipt printer 24 that are used for the payment settlement. The POS terminal 20 including these units is well known, and the description thereof will be omitted.

The checkout counter 2 is arranged along a customer path. The register table 3 is placed at one end portion of the checkout counter 2 on the side of the casher and substantially vertical to the checkout counter 2. A space surrounded by the checkout counter 2 and the register table 3 are a space for the casher (operator), and an opposite side of the checkout counter 2 is the customer path. The customer proceeds along the checkout counter 2 from an end portion of the checkout counter 2 opposite to the end portion thereof where the register table 3 is provided to the latter end portion, and performs the checkout process.

The housing 10A of the scanner device 10 stands substantially at a center of the checkout counter 2 along the customer path. The keyboard 11, the touch panel 12, and the reading window 10B are respectively mounted on the housing 10A toward the casher's side, and the customer-use display 13 is mounted toward the customer's side.

A merchandise receiving surface of the checkout counter 2 at an upstream side in the customer-moving direction with respect to the scanner device 10 is a space for placing a shopping basket 5 in which an unregistered merchandise M to be purchased by the customer is put. In addition, a merchandise receiving surface of the checkout counter 2 at a downstream side with respect to the scanner device 10 is a space for placing a shopping basket 6 in which the merchandise M registered by the scanner device 10 is put.

FIG. 2 is a block diagram of a scanner device 10 and peripheral components connected to thereto. The scanner device 10 includes a central processing unit (CPU) 101, read only memory (ROM) 102, random access memory (RAM) 103, a communication interface 104, an image processing unit 105, and a light source controller 106, in addition to the above-described keyboard 11, the touch panel 12, and the customer-use display 13. In the scanner device 10, the CPU 101, the ROM 102, the RAM 103, the communication interface 104, the image processing unit 105, and the light source controller 106 are connected through a bus line 107 such as an address bus or a data bus. In addition, the keyboard 11, the touch panel 12, and the customer-use display 13 are connected to the bus line 107 via an input-output circuit (not illustrated).

The CPU 101 corresponds to a central component of the scanner device 10. The CPU 101 controls each unit that performs various functions as the scanner device 10 according to an operating system and an application program.

The ROM 102 corresponds to a main storage component of the scanner device 10. The ROM 102 stores the operating system and the application program. In some cases, the ROM 102 stores data necessary for the CPU 101 to execute processing of controlling each component.

The RAM 103 also corresponds to a main storage component of the scanner device 10. The RAM 103 stores data necessary for the CPU 101 to execute the processing. In addition, the RAM 103 is also used as a work area in which information is appropriately rewritten by the CPU 101.

The communication interface 104 transmits and receives a data signal to and from the POS terminal 20 connected via the communication cable 7 according to a predetermined protocol.

The POS terminal 20 includes a merchandise data file 8 and a recognition dictionary file 9. The merchandise data file 8 includes merchandise data such as a merchandise name and a unit price in association with a merchandise code set for each merchandise sold in the store in advance.

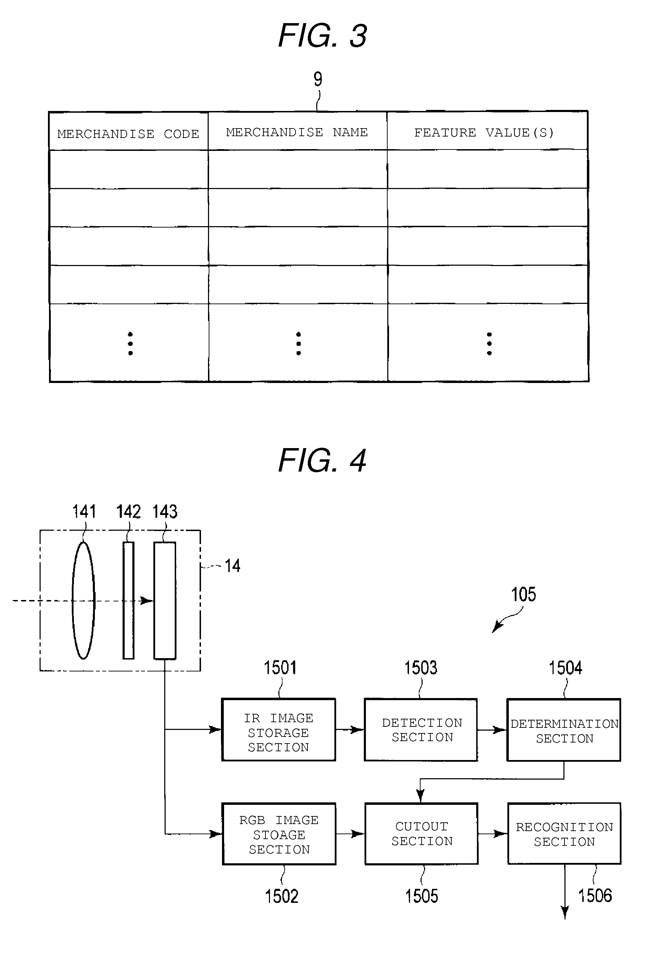

As illustrated in FIG. 3, the recognition dictionary file 9 includes a merchandise name and one or more feature values in association with a merchandise code with respect to each of the merchandise included in the merchandise data file 8. The feature value is data in which a feature of a standard external appearance of particular merchandise, such as a shape, a hue on the surface, a texture, and an unevenness of the merchandise is parameterized. The feature value of particular merchandise differs depending on an imaging direction of the merchandise. For this reason, with respect to one kind of merchandise, the recognition dictionary file 9 includes a plurality of feature values created from a plurality of standard images the merchandise of which the imaging direction is different, respectively.

The merchandise data file 8 and the recognition dictionary file 9 are stored in an auxiliary storage device. An electric erasable programmable read-only memory (EEPROM), a hard disc memory (HDD), or a solid state drive (SSD) are the examples of the auxiliary storage device. The auxiliary storage device may be incorporated in the POS terminal 20 or may be mounted in an external device connected to the POS terminal 20.

The light source controller 106 controls ON and OFF of the light source 15 that emits a light of a visible light range and an infrared light range in synchronization with a timing of imaging by the CCD imaging element. The light source 15 is included in the imaging unit 14.

The imaging unit 14 receives the visible light and the infrared ray. Then, the imaging unit 14 generates visible image data (RGB image data or color image data) based on light received by pixels for three primary colors (RGB). In addition, the imaging unit 14 generates infrared image data (IR image data) based on the infrared ray received by pixels for the infrared ray (IR). The image processing unit 105 processes the visible image data and the infrared image data generated by the imaging unit 14.

FIG. 4 is a block diagram of the imaging unit 14 and the image processing unit 105. The imaging unit 14 includes an imaging lens 141, an optical filter 142, and the CCD imaging element (area image sensor) 143.

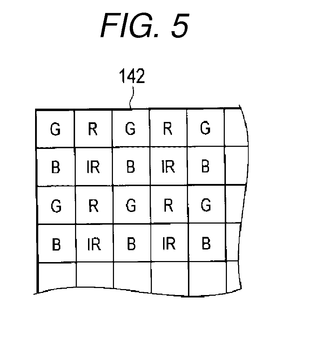

The optical filter 142, as illustrated in FIG. 5, is a filter in which four kinds of pixel filters such as an R pixel filter, a G pixel filter, a B pixel filter, and an IR pixel filter are arranged in a matrix shape. Specifically, in the odd number rows such as the first row, the third row, and so on, the G pixel filter and R pixel filter are alternately arranged in an order from the first column. Similarly, in the even number rows such as the second row, the fourth row, and so on, the B pixel filter and the IR pixel filter are alternately arranged in an order from the first column. A group of the R, G, B pixel filters in two adjacent rows and columns and one IR pixel filters correspond to one pixel of the visible image data and the infrared image data, respectively.

The R pixel filter has a cutoff frequency at approximately 700 nm. That is, the R pixel filter transmits the light having the wavelength of blue light to the red light in the visible light wavelength region. The G pixel filter has a cutoff frequency at approximately 600 nm. That is, the G pixel filter transmits the light having the wavelength of blue light to the green light in the visible light wavelength region. The B pixel filter has a cutoff frequency at approximately 500 nm. That is, the B pixel filter transmits the light having the wavelength of blue light in the visible light wavelength region. The IR pixel filter transmits only the infrared ray that includes a near-infrared light having a frequency of 700 nm or more.

By disposing the optical filter 142 configured like this between the imaging lens 141 and the CCD imaging element 143, the CCD imaging element 143 may generate the visible image data of the three primary colors of RGB based on lights received by pixels corresponding to the R pixel filter, the G pixel filter, and the B pixel filter (visible image acquisition section). In addition, the CCD imaging element 143 may generate the infrared image data based on the infrared ray received by the pixel corresponding to the IR pixel filter (infrared light acquisition section). In this way, the imaging unit 14 has a structure to generate both the visible image data and the infrared image data of an image in the frame area having the same size using a single CCD imaging element 143.

The image processing unit 105 includes an IR image storage section 1501, an RGB image storage section 1502, a detection section 1503, a determination section 1504, a cutout section 1505, and a recognition section 1506. The IR image storage section 1501 stores the infrared image data generated by the CCD imaging element 143. The RGB image storage section 1502 stores the visible image data generated by the CCD imaging element 143. The detection section 1503 detects an object included in the image of the infrared image data. The determination section 1504 determines a rectangular area in which the object detected by the detection section 1503 is contained. The cutout section 1505 cuts out a visible image in the rectangular area determined by the determination section 1504 from the entire visible image. The recognition section 1506 identifies the object (merchandise) from the visible image cut out by the cutout section 1505.

The functions of each section 1051 to 1056 of the image processing unit 105 are achieved by the CPU 101 performing the information processing according to an object recognition program stored in the ROM 102.

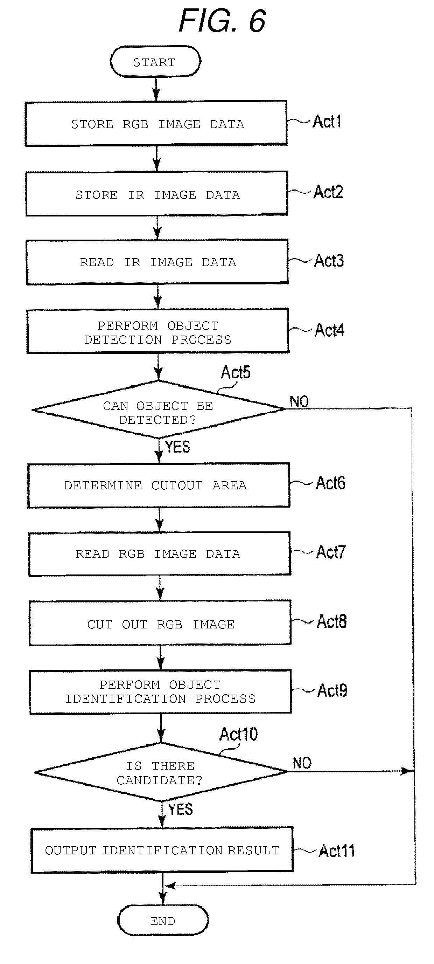

FIG. 6 is a flow chart illustrating the information processing performed by the CPU 101 according to the object recognition program. The CPU 101 starts the processing for each frame image captured by the imaging unit 14. The processing described hereafter with reference to FIG. 6 is an example, and various processing may appropriately be performed as long as a similar result can be obtained.

First, the CPU 101 (RGB image storage section 1502) stores the visible image data generated by the CCD imaging element 143 in the visible image memory in Act 1. In addition, the CPU 101 (IR image storage section 1501) stores the infrared image data generated by the CCD imaging element 143 in the infrared image memory in Act 2. Both of the visible image memory and the infrared image memory are formed in the RAM 103. The order of Act 1 and Act 2 is not limited to above-described order. Act 2 may be executed first, before Act 1 is executed.

Subsequently, the CPU 101 reads the infrared image data stored in the infrared image memory in Act 3. Then, the CPU 101 (detection section 1503) performs a detection process of the object included in the corresponding image based on the infrared image data in Act 4. The detection of the object from the infrared image is performed based on the difference in brightness (contrast) between the object and the background.

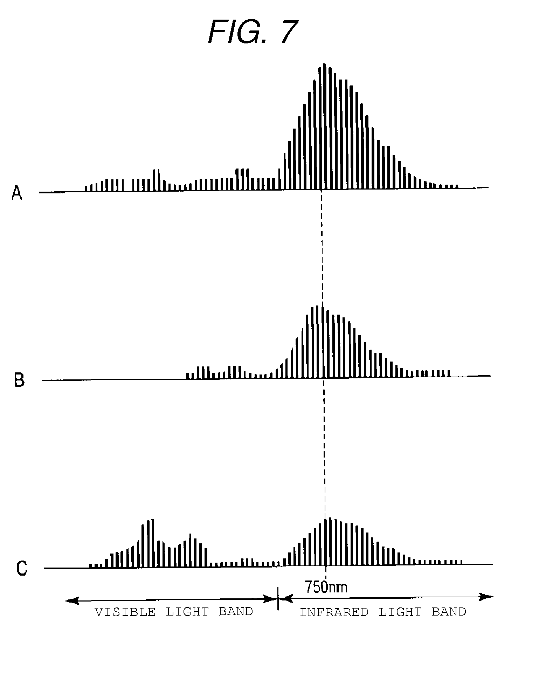

FIG. 7A to FIG. 7C illustrate, under a standard light, a reflection spectrum of a light reflected on the surface of different objects. FIG. 7A illustrates a reflection spectrum in a case where the object is an eggplant having a dark violet color. FIG. 7B illustrates a reflection spectrum in a case where the object is an avocado having a dark green color. FIG. 7C illustrates a reflection spectrum in a case where the object is a spinach having a green color.

As illustrated in FIG. 7A and FIG. 7B, even when the objects are the eggplant or the avocado, of which surface color is close to the background color of black and the reflection rate in the visible light region is low, the reflection rate is high at around 750 nm, which is in the near-infrared region. In addition, as illustrated in FIG. 7C, even when the object is the spinach that reflects light in the visible light region, the reflection rate is high at around 750 nm. If the reflection rate is high, the difference in intensity of infrared ray reflected by the object and by the background object is large. Therefore, by using the infrared image data, the object which cannot be detected based on the visible image data may be detected. In addition, the object which may be detected based on the visible image data may also be detected based on the infrared image data. That is, an object detection rate can be improved by detecting the object based on the infrared image data.

The CPU 101 determines whether or not an object is detected based on the infrared image data in Act 5. For example, if the object is not included in the infrared image and thus, the object cannot be detected (No in Act 5), the CPU 101 finishes the information processing for the frame image.

If the object is detected (Yes in Act 5), the CPU 101 (determination section 1504) determines the rectangular area surrounding the object as a cutout area in Act 6. When the cutout area is determined, the CPU 101 reads the visible image data stored in the visible image memory in Act 7. Then, from the visible image, the CPU 101 (cutout section 1505) cuts out the image of the area same as the area determined as the cutout area in Act 8.

The CPU 101 (recognition section 1506) performs an identification process of the object (merchandise) included in the image based on the image cut out from the visible image in Act 9.

That is, the CPU 101 extracts the external appearance feature value such as the shape of the object, the hue on the surface, the texture, and the unevenness from data of the cutout image. The CPU 101 writes the extracted external appearance feature value in a feature value region in the RAM 103.

When the extraction of the external appearance feature value is finished, the CPU 101 accesses the recognition dictionary file 9 in the POS terminal 20 via the communication interface 104. Then, the CPU 101 reads the data (merchandise code, merchandise name, and feature value) from the recognition dictionary file 9 with respect to each kinds of merchandise.

For each reading of the data in the recognition dictionary file 9, the CPU 101 calculates a similarity degree between the external appearance feature value stored in the feature value region and the feature value read from the recognition dictionary file 9, using, for example, a similarity degree indicated by hamming distance. Then, the CPU 101 determines whether or not the similarity degree is higher than a predetermined reference threshold value. The predetermined reference threshold value is a lower limit of the similarity degree to select merchandise to be left as a candidate. If the similarity degree is higher than the reference threshold value, the CPU 101 stores the merchandise code and merchandise name read from the recognition dictionary file 9 and the calculated similarity degree in a candidate region formed in the RAM 103.

The CPU 101 performs the above-described processing with respect to each of merchandise data stored in the recognition dictionary file 9. Then, if it is determined that there is no non-processed merchandise data, the CPU 101 ends the recognition processing.

When the recognition processing ends, the CPU 101 determines whether or not the data (merchandise code, merchandise name, and similarity degree) is stored in the candidate region in Act 10. If the data is not stored (No in Act 10), the CPU 101 finishes the information processing for the frame image.

If the data is stored (Yes in Act 10), the CPU 101 outputs the data in the candidate region in Act 11. Specifically, the CPU 101 creates a candidate list in which the merchandise names are listed in an order of high similarity degree. Then, the CPU 101 operates to display the candidate list on the touch panel 12. Here, if any of the merchandise is selected from the list by touching the touch panel 12, the CPU 101 determines the merchandise code of the merchandise as a registered merchandise code. Then, the CPU 101 transmits the registered merchandise code to the POS terminal 20 via the communication interface 104. If the similarity degree of particular merchandise exceeds a predetermined threshold value, which is sufficiently higher than the reference threshold value, the CPU 101 may determine the merchandise code of the particular merchandise as the registered merchandise code, and may transmit the registered merchandise code to the POS terminal 20. In this case, the candidate list is not created. Then, the CPU 101 finishes the information processing for the frame image.

Here, the processor of the POS terminal 20 that receives the merchandise code searches the merchandise data file 8 using the merchandise code and reads the merchandise data such as the merchandise name and the unit price. Then, the processor executes the registration processing of the merchandise sales data based on the merchandise data. The registration processing is well known and the description thereof will be omitted.

In the scanner device 10 configured as described above, when the operator brings the merchandise M near the reading window 10B, an image that includes the merchandise M is captured by the imaging unit 14. At this time, the visible image data is generated by the imaging unit 14 based on pixel signals of three primary colors of RGB corresponding to the visible light and the infrared image data is generated by the imaging unit 14 based on IR pixel signals corresponding to the infrared light as frame images data having the same image size.

In the scanner device 10, the object included in the captured image is detected based on the infrared image data. As described with reference to FIG. 7A to FIG. 7C, even when the object, such as the eggplant or the avocado, of which the reflection rate in the visible light range is low, is subjected to the recognition process, the difference in brightness (contrast) between the object and the background is large in the infrared image. Therefore, by detecting the object (merchandise) based on the infrared image data, the object (merchandise) detection rate can be improved.

If the merchandise included in the image is detected based on the infrared image data, the scanner device 10 determines a rectangular area surrounding the merchandise to be the cutout area. When the cutout area is set in this way, in the scanner device 10, the image of the area same as the area determined to be the cutout area is cut out from the visible image. Then, the merchandise included in the image is identified based on the image cut out from the visible image.

In this way, according to the present embodiment, since the object included in the image can be detected based on the infrared image data and the cutout area for the object recognition can be determined, even for the object such as the eggplant or the avocado, in which the reflection rate is low in the visible light range, a recognition rate may be improved.

### (Second Embodiment)

In the first embodiment, the imaging unit 14 has a structure to capture both the visible image and the infrared image which are the frame image having the same size using the single CCD imaging element 143. The structure of the imaging unit 14 is not limited thereto.

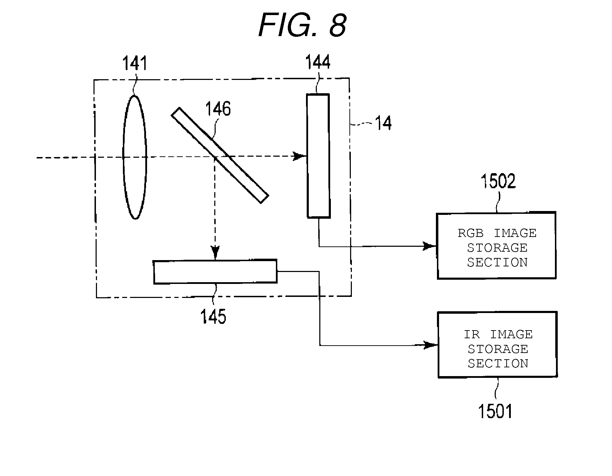

The imaging unit 14 according to a second embodiment is illustrated in FIG. 8. The imaging unit 14 according to the second embodiment includes the imaging lens 141, a first CCD imaging element (area image sensor) 144, a second CCD imaging element (area image sensor) 145, and a dichroic mirror 146. The imaging lens 141 is similar to the imaging lens 141 according to the first embodiment, and the second CCD imaging element 145 is similar to the imaging lens 141 and the CCD imaging element 143 according to the first embodiment.

The dichroic mirror 146 reflects infrared rays incident through the imaging lens 141 and transmits light having wavelength in the visible wavelength range. The first CCD imaging element 144 receives the light transmitted through the dichroic mirror 146. Therefore, the first CCD imaging element 144 may capture the visible image of the three primary color of RGB (visible light image acquisition section). The second CCD imaging element 145 receives the infrared ray reflected by the dichroic mirror 146. Therefore, the second CCD imaging element 145 may capture the infrared image (infrared light acquisition section).

Visible image data generated by the first CCD imaging element 144 is stored in the visible image memory by the RGB image storage section 1502. Infrared image data generated by the second CCD imaging element 145 is stored in the infrared image memory by the IR image storage section 1501.

### (Third Embodiment)

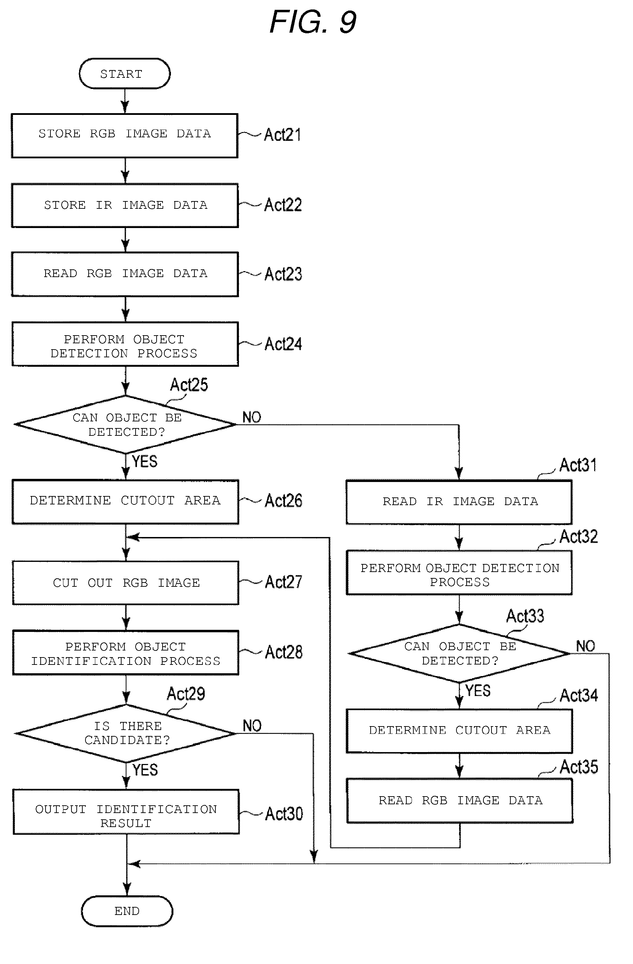

The information processing performed by the CPU 141 according to the object recognition program may not be performed according to the process illustrated in the flow chart in FIG. 6. FIG. 9 is a flow chart illustrating the information processing performed by the CPU 141 according to the object recognition program in a third embodiment.

In the third embodiment, first, the CPU 101 stores the visible image data generated by the CCD imaging element 143 (or the first CCD imaging element 144) in the visible image memory in Act 21. Then, the CPU 101 stores the infrared image data generated by the CCD imaging element 143 (or the second CCD imaging element 145) in the infrared image memory in Act 22. The order of Act 21 and Act 22 is not limited to above-described order. Act 22 may be executed first, before Act 21 is executed.

Subsequently, the CPU 101 (first detection section) reads the visible image data stored in the visible image memory in Act 23. Then, the CPU 101 detects the object included in the visible image in Act 24. The detection of the object from the visible image is performed based on the difference in brightness (contrast) between the object and the background.

The CPU 101 determines whether or not the object may be detected based on the visible image in Act 25. If the object is detected (Yes in Act 25), the CPU 101 (determination section 1504) determines the rectangular area surrounding the object to be a cutout area in Act 26. When the cutout area is determined, the CPU 101 (cutout section 1505) cuts out the image of the area same as the cutout area from the visible image in Act 27. The CPU 101 (recognition section 1506) performs an identification process of the object (merchandise) included in the image based on the image cut out from the visible image in Act 28.

On the other hand, if the object cannot be detected based on the visible image (No in Act 25), the CPU 101 reads the infrared image data stored in the infrared image memory in Act 31. Then, the CPU 101 (second detection section) performs a detection process of the object included in the infrared image in Act 32. The detection of the object from the infrared image is performed based on the difference in brightness (contrast) between the object and the background.

The CPU 101 determines whether or not the object is detected based on the infrared light image in Act 33. For example, if the object is not detected in the infrared image (No in Act 33), the CPU 101 finishes the information processing for the frame image.

If the object is detected (Yes in Act 33), the CPU 101 (determination section 1504) determines the rectangular area surrounding the object to be a cutout area in Act 34. When the cutout area is determined, the CPU 101 reads the visible image data stored in the visible image memory in Act 35. Then, the process proceeds to Act27, and then, from the visible image, the CPU 101 (cutout section 1505) cuts out the image of the area same as the cutout area. The CPU 101 (recognition section 1506) performs the identification process of the object (merchandise) included in the image cut out from the visible image in Act 28.

When the recognition processing ends, the CPU 101 determines whether or not the data (merchandise code, merchandise name, and similarity degree) is stored in the candidate region, in Act 29. If the data is not stored (No in Act 29), the CPU 101 finishes the information processing for the frame image.

If the data is stored (Yes in Act 29), similarly to Act 11 in the first embodiment, the CPU 101 outputs the data in the candidate region in Act 30. Then, the CPU 101 finishes the information processing for the frame image.

According to the third embodiment, similarly to the first embodiment, it is possible to provide the scanner device 10 that may recognize the object (merchandise) with a high accuracy regardless of the color of the target object (merchandise).

Embodiments of the present disclosure are not limited to the embodiments described above.

In the embodiments described above, the scanner device 10 recognizes the merchandise held up near the reading window 10B; however, a device that recognizes an object is not limited to the scanner device that recognizes merchandise. The object recognition technology may also be applied to a device that recognizes an object other than merchandise.

In addition, in each embodiment described above, the recognition dictionary file 9 is stored in the POS terminal 20. However, the recognition dictionary file 9 may be stored in the scanner device 10.

In the second embodiment, instead of the dichroic mirror 146, a prism (a dichroic prism) having a function similar to the mirror may be used. The imaging units illustrated in FIG. 4 and FIG. 8 are examples, and any imaging unit configured to acquire the visible image and the infrared image of the same frame may be used in the embodiments.

In the third embodiment, the visible image data is first read to perform the object detection, and if the object cannot be detected, the infrared image data is read to perform the object detection. However, the order of reading the image data may be reversed. That is, the infrared image data may be first read to perform the object detection, and if the object cannot be detected, the visible image data may be read to perform the object detection.

Generally, the object recognition device is provided in a state that a program such as an object recognition program is stored in the ROM or the like of the device. However, not limited thereto, the object recognition program may be provided separately from a computer device and may be written into a writable storage device of the computer device by a user's operation. The object recognition program may be provided by being recorded in the removable recording medium or by communication via the network. Any forms of recording medium, such as a CD-ROM and a memory card, may be used as long as the program may be stored and may be read by the device. In addition, the functions obtained by the installation or download of the program may be achieved in cooperation with the operating system (OS) in the device.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An object recognition apparatus, comprising:
an image capturing unit configured to capture a first image based on infrared or near-infrared light and a second image based on visible light, an object being included in the first and second images, respectively;
a storage unit storing image data of articles; and
a processing unit configured to determine a first portion of the first image in which the object is contained, extract a second portion of the second image corresponding to the first portion, and select one of the articles as a candidate for the object based on the second portion of the second image and the stored image data.

2. The object recognition apparatus according to claim 1, wherein
the first portion is a rectangular region of the first image.

3. The object recognition apparatus according to claim 1 or 2, wherein
the processing unit is further configured to determine the second portion of the second image, in which the object is contained, and select one of the articles as a candidate for the object based on the determined second portion of the second image and the stored image data.

4. The object recognition apparatus according to claim 3, wherein
when the second portion of the second image is determinable, the one of the articles is selected as the candidate based on the determined second portion, and
when the second portion of the second image is not determinable, the one of the articles is selected as the candidate based on the extracted second portion.

5. The object recognition apparatus according to any one of claims 1 to 4, wherein
the image capturing unit includes an image sensor having a plurality of pixels arranged in a matrix form, each pixel including a first filter that selectively transmits the visible light and a second filter that selectively transmits the infrared or near-infrared light.

6. The object recognition apparatus according to any one of claims 1 to 5, wherein
the image capturing unit includes a first image sensor, a second image sensor, and a light separating unit configured to separate the infrared or near-infrared light from the visible light and disposed such that the infrared or near-infrared light is directed to the first image sensor and the visible light is directed to the second image sensor.

7. The object recognition apparatus according to any one of claims 1 to 6, further comprising:
a light radiating unit configured to radiate the infrared or near-infrared light and the visible light towards the object.

8. The object recognition apparatus according to any one of claims 1 to 7, wherein
the first and second images are images of same angle and same size.

9. The object recognition apparatus according to claim 1, wherein
the articles are fresh foods including vegetables and fruits.

10. A method for determining a candidate for an object, comprising:
receiving image data of a first image based on infrared or near-infrared light and image data of a second image based on visible light, an object being included in the first and second images, respectively;
storing image data of articles;
determining a first portion of the first image in which the object is contained;
extracting a second portion of the second image corresponding to the first portion; and
selecting one of the articles as a candidate for the object based on the second portion of the second image and the stored image data.

11. The method according to claim 10, wherein
the first portion is a rectangular region of the first image.

12. The method according to claim 10 or 11, further comprising:
irradiating the object with the infrared or near-infrared light and the visible light.

13. The method according to any one of claims 10 to 12, further comprising:
determining whether or not a second portion of the second image in which the object is contained, is determinable;
when the second portion is determinable, determining the second portion and selecting one of the articles as a candidate for the object based on the determined second portion and the stored image data; and
when the second portion is not determinable, determining a first portion of the first image in which the object is contained, extracting a second portion of the second image corresponding to the first portion, and selecting one of the articles as a candidate for the object based on the extracted second portion and the stored image data.
